(19) **Europäisches Patentamt / European Patent Office / Office européen des brevets**

(11) **EP 4 113 655 A1**

(12) **EUROPEAN PATENT APPLICATION**
published in accordance with Art. 153(4) EPC

(43) Date of publication:
**04.01.2023 Bulletin 2023/01**

(21) Application number: **21931921.7**

(22) Date of filing: **16.11.2021**

(51) International Patent Classification (IPC):
**H01M 4/13** (2010.01) **H01M 4/136** (2010.01)
**H01M 4/62** (2006.01) **H01M 4/58** (2010.01)
**H01M 10/052** (2010.01) **H01M 4/02** (2006.01)

(52) Cooperative Patent Classification (CPC):
**H01M 4/02; H01M 4/13; H01M 4/136; H01M 4/58;
H01M 4/62; H01M 10/052**

(86) International application number:
**PCT/KR2021/016787**

(87) International publication number:
**WO 2022/203149 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.03.2021 KR 20210039316**

(71) Applicant: **LG Energy Solution, Ltd.
Seoul 07335 (KR)**

(72) Inventors:
• **LEE, Kyung Min**
  **Daejeon 34122 (KR)**
• **LEE, Hye Youn**
  **Daejeon 34122 (KR)**
• **LEE, Su Rim**
  **Daejeon 34122 (KR)**
• **JEON, Sung Wook**
  **Daejeon 34122 (KR)**

(74) Representative: **Plasseraud IP
66, rue de la Chaussée d'Antin
75440 Paris Cedex 09 (FR)**

(54) **CATHODE FOR LITHIUM SECONDARY BATTERY AND LITHIUM SECONDARY BATTERY**

(57) The present invention relates to a positive electrode for a lithium secondary battery, and a lithium secondary battery including the same. The positive electrode for a lithium secondary battery according to the present invention sequentially includes a first mixture layer and a second mixture layer on a positive electrode current collector, and a heterogeneous fluorine-based binder having different miscibility and molecular weight is used for the first mixture layer and the second mixture layer respectively. Accordingly, it is possible to secure the safety of the battery by increasing the penetration resistance in the case that a metal body such as a nail penetrates the electrode, and the lifespan characteristics of the battery can be improved by enhancing the interface adhesive force of each layer constituting the positive electrode and wettability of the mixture layer to the electrolyte solution at the same time.

**EP 4 113 655 A1**

**Description**

[Technical Field]

The present invention relates to a positive electrode for a lithium secondary battery, and more particularly, to a positive electrode for a lithium secondary battery having an improved safety, and a lithium secondary battery. This application claims the benefit of priority based on Korean Patent Application No. 10-2021-0039316, filed on March 26, 2021, and the entire contents of the Korean patent application are incorporated herein by reference.

[Background Art]

As technology development and demand for mobile devices increase, the demand for secondary batteries as energy sources is rapidly increasing. Among such secondary batteries, lithium secondary batteries having a high energy density and operating potential, a long cycle life and a low self-discharge rate are commercialized and widely used.

Recently, as a lithium secondary battery is used as a power source of a medium or large size device such as an electric vehicle, a high capacity, a high energy density and lost costs for lithium secondary batteries are required. As such, studies have been actively conducted to use low-cost Ni, Mn, Fe, etc. which may substitute expensive Co.

One of the main study objects of the lithium secondary battery is in implementing a high capacity and high output electrode active material and improving the safety of the battery using the same, and currently, the lithium secondary battery is designed to be used in a specific voltage region (generally, equal to or less than 4.4 V). However, the cell potential may rise to a level (up to 12V) above the general limit, and if such an overcharge state exceeding an allowed electric current or voltage is continued, serious problems such as explosion or ignition of the lithium secondary battery may be caused. Particularly, in the case of a lithium secondary battery, which is used in medium-sized battery packs as power sources of as electric vehicles, hybrid cars etc., a long lifespan is required, and safety is very important because a lot of battery cells are concentrated.

As such, Korean Patent Publication No. 2019-0047203 discloses a technology for securing safety of a battery by blocking a charging current by increasing the resistance at the time of an overcharge by interposing an overcharge preventing layer between a positive electrode current collector and a positive electrode active material layer. However, when an electrode including an overcharge preventing layer is used, safety is improved, but lifespan characteristics of the battery may become poor due to generation of an interlayer crack by a difference in composition between the overcharge preventing layer and the positive electrode active material layer, and safety decreases at the time of penetration of a needle body due to a low penetration resistance of an electrode.

Therefore, there is a need for a technology about a positive electrode for a secondary battery capable of increasing the penetration resistance in the case that a metal body such as a nail penetrates an electrode, without deteriorating the lifespan characteristics while improving the safety.

[Disclosure]

[Technical Problem]

As such, an object of the present invention is to provide a positive electrode for a secondary battery capable of securing safety of a battery by increasing the penetration resistance in the case that a metal body such as a nail penetrates an electrode and improving lifespan characteristics of the battery, and a lithium secondary battery including the same.

[Technical Solution]

In order to solve the above-described problems,
**[0009]** In an embodiment of the present invention, there is provided a positive electrode for a lithium secondary battery, the positive electrode comprising a structure including a laminate including sequential lamination of a current collector, a first mixture layer, and a second mixture layer, in order.
Herein, the first mixture layer includes a first binder containing a fluorine-based homopolymer.
Further, the second mixture layer includes a second binder containing a fluorine-based copolymer having a miscible functional group.
Further, the miscible functional group is derivated from one or more monomers selected from the group consisting of (meth)acrylic acid, C1 to C10 alkyl(meth)acrylate, C1 to C10 alkyl(meth)acrylonitrile, and C1 to C10 alkyl(meth)acrylamide.
At this time, the first binder and the second binder satisfy Formula 1:

[Formula 1]

$$1.0 \leq Mw_{2nd}/Mw_{1st} \leq 2.0$$

in the above Formula 1,

$Mw_{1st}$ denotes a weight average molecular weight of the first binder, and
$Mw_{2nd}$ denotes a weight average molecular weight of the second binder.

Further, a weight average molecular weight ($Mw_{1st}$) of the first binder may be in a range of 10,000 g/mol to 1,000,000 g/mol.

Further, a content of the miscible functional group may be in a range of 0.1 mol% to 10 mol% based on the fluorine-based copolymer.

Further, the first mixture layer may include a first active material of 75 to 98 parts by weight, the first binder of 2 to 20 parts by weight, and a first conductive material of 5 parts by weight or less among a total of 100 parts by weight.

Herein, the first active material may include lithium iron phosphate represented by Chemical formula 1:

[Chemical formula 1] $\quad Li_{1+x}Fe_{1-y}M^1_y(PO_{4-z})X_z$

in the above Chemical formula 1,

$M^1$ denotes at least one selected from the group consisting of Al, Mg and Ti, and X denotes at least one selected from the group consisting of F, S and N,
$-0.5 \leq x \leq +0.5$, $0 \leq y \leq 0.5$ and $0 \leq z \leq 0.1$.

In addition, the first mixture layer may satisfy at least one of Formula 2 and Formula 3:

$$[\text{Formula 2}] \ 4 \leq a/b \leq 20$$

$$[\text{Formula 3}] \ 15 < a/c$$

in the above Formula 2 and Formula 3,

a denotes a content of a first active material,
b denotes a content of the first binder,
c denotes a content of a first conductive material.

Further, the second mixture layer may include a second active material of 80 to 98 parts by weight, the second binder of 1 to 10 parts by weight, and a second conductive material of 10 parts by weight or less among a total of 100 parts by weight.

In addition, the first mixture layer and the second mixture layer may satisfy at least one of Formulas 4 to 6:

$$[\text{Formula 4}] \ a < a'$$

$$[\text{Formula 5}] \ b > b'$$

$$[\text{Formula 6}] \ c < c'$$

in the above Formula 4 to Formula 6,

a, b and c are the same as defined in the above Formula 2 and Formula 3,
a' denotes a content of a second active material,

b' denotes a content of the second binder,

c' denotes a content of a second conductive material.

In addition, an average thickness of the first mixture layer may be in a range of 0.1 to 300 $\mu$m, and specifically in a range of 0.1 to 10 $\mu$m.

Further, the present invention provides a lithium secondary battery including the above-described positive electrode, a negative electrode, and a separator positioned between the positive electrode and the negative electrode in an embodiment.

[Advantageous Effects]

A positive electrode for a lithium secondary battery according to the present invention sequentially includes a first mixture layer and a second mixture layer on a positive electrode current collector, and a heterogeneous fluorine-based binder having different miscibility and molecular weight is used for the first mixture layer and the second mixture layer respectively. Accordingly, it is possible to secure the safety of the battery by increasing the penetration resistance in the case that a metal body such as a nail penetrates the electrode, and the lifespan characteristics of the battery can be improved by enhancing the interface adhesive force of each layer constituting the positive electrode and wettability of the mixture layer to the electrolyte solution at the same time.

[Detailed Description of the Preferred Embodiments]

As the invention allows for various changes and numerous embodiments, particular embodiments will be described in detail in the written description.

However, this is not intended to limit the present invention to the specific embodiments, and it should be understood to include all changes, equivalents, and substitutes included in the spirit and scope of the present invention.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof.

Also, in the present invention, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

Hereinafter, the present invention will be described in detail.

**Positive electrode for lithium secondary battery**

In an embodiment of the present invention,

the present invention provides a positive electrode for a lithium secondary battery, the positive electrode comprising a structure including a laminate including sequential lamination of a current collector, a first mixture layer, and a second mixture layer, in order,

wherein the first mixture layer includes a first binder containing a fluorine-based homopolymer, and

wherein the second mixture layer includes a second binder containing a fluorine-based copolymer having a miscible functional groupderivated from one or more monomers selected from the group consisting of (meth)acrylic acid, C1 to C10 alkyl(meth)acrylate, C1 to C10 alkyl(meth)acrylonitrile, and C1 to C10 alkyl(meth)acrylamide.

A positive electrode for a lithium secondary battery according to the present invention has a structure which is generated by sequentially laminating a first mixture layer and a second mixture layer on a current collector.

At this time, the first mixture layer may include a first active material, a first binder and a first conductive material, and the second mixture layer may include a second active material, a second binder and a second conductive material.

Specifically, the first mixture layer and the second mixture layer are a positive electrode active material which allows reversible intercalation and deintercalation, and may include a first active material and a second active material, respectively.

In one example, the first active material included in the first mixture layer may include at least one type of lithium iron phosphate represented by Chemical formula 1:

[Chemical formula 1] $Li_{1+x}Fe_{1-y}M^1_y(P_{4-z})X_z$

in the above Chemical formula 1,

$M^1$ is at least one selected from the group consisting of Al, Mg and Ti, X is at least one selected from the group consisting of F, S and N, and $-0.5 \leq x \leq +0.5$, $0 \leq y \leq 0.5$, and $0 \leq z \leq 0.1$.

The first active material is a lithium iron phosphate represented by Chemical formula 1 and may include at least one compound selected from the group consisting of $LiFePO_4$, $Li(Fe,Al)PO_4$, $Li(Fe,Mg)PO_4$ and $Li(Fe,Ti)PO_4$, and specifically $LiFePO_4$ may be used.

The lithium iron phosphate represented by the Chemical formula 1 may have an olivine structure. The volume of lithium iron phosphate having an olivine structure shrinks as lithium escapes from the inside at about 4.5V or higher overcharge voltage. As such, the conductive path of the first mixture layer is quickly blocked, thereby allowing the first mixture layer to act as an insulating layer, and through this, the resistance of the first mixture layer increases and the charging current is blocked, thereby showing effects in reaching an overcharge termination voltage. To this end, the first active material may have a form having a large specific surface area and a small particle size so that the first mixture layer may be quickly converted into an insulating layer at an overcharge voltage condition. Specifically, the average size of the first active material may be less than 10 $\mu$m, and specifically equal to or less than 9 $\mu$m, equal to or less than 8 $\mu$m, equal to or less than 7 $\mu$m, in the range of 0.01 to 8 $\mu$m, in the range of 0.01 to 6 $\mu$m, in the range of 0.01 to 5 $\mu$m, 0.01 to 3 $\mu$m, or 0.1 to 1 $\mu$m.

In another example, the second active material included in the second mixture layer may include at least one kind of lithium nickel oxide represented by Chemical formula 2. In some cases, it may be used together with lithium iron phosphate represented by Chemical formula 1 included in the first active material:

[Chemical formula 2] $Li_pNi_{1-q-r-s}Co_qMn_rM^2_sO_2$

in the above Chemical formula 2,

$M^2$ is at least one selected from the group consisting of Al, Zr, Ti, Mg, Ta, Nb, Mo and Cr, and $0.9 \leq p \leq 1.5$, $0 \leq q \leq 1$, $0 \leq r \leq 0.5$, $0 \leq s \leq 0.1$, and $0 < q+r+s < 1$.

The second active material is not necessarily limited to the lithium nickel oxide represented by Chemical formula 2, but the second active material may include a layered compound such as lithium cobalt oxide ($LiCoO_2$) or lithium nickel oxide ($LiNiO_2$), or a compound substituted with at least one transition metal; lithium manganese oxide such as chemical formula $Li_{1+x1}Mn_{2-x1}O_4$ (herein, x1 is 0 to 0.33), $LiMnO_3$, $LiMn_2O_3$ or $LiMnO_2$; lithium copper oxide ($Li_2CuO_2$); vanadium oxide such as $LiV_3O_8$, $LiV_3O_4$, $V_2O_5$ or $Cu_2V_2O_7$; N site type lithium nickel oxide represented by chemical formula $LiNi_{1-x2}M^a_{x2}O_2$ (herein, $M^a$= Co, Mn, Al, Cu, Fe, Mg, B or Ga, x2 = 0.01 to 0.3); lithium manganese compound oxide represented by $LiMn_{2-x3}M^b_{x3}O_2$ (herein, $M^b$= Co, Ni, Fe, Cr, Zn or Ta, x3 = 0.01 to 0.1) or $Li_2Mn_3M^cO_8$ (herein, $M^c$=Fe, Co, Ni, Cu or Zn); lithium manganese compound oxide having a spinel structure, represented by $LiNi_{x4}Mn_{2-x4}O_4$ (herein, x4 = 0.01 to 1); $LiMn_2O_4$ in which part of Li has been substituted with alkali earth metal ions; disulfide compound; $Fe_2(MoO_4)_3$, or the like.

Specifically, the lithium nickel oxide represented by the Chemical formula 2 may include at least one compound selected from the group consisting of $LiCoO_2$, $LiCo_{0.5}Zn_{0.5}O_2$, $LiCo_{0.7}Zn_{0.3}O_2$, $LiNiO_2$, $LiNi_{0.5}Co_{0.5}O_2$, $LiNi_{0.6}Co_{0.4}O_2$, $LiNi_{1/3}Co_{1/3}Al_{1/3}O_2$, $LiMnO_2$, $LiNi_{1/3}Co_{1/3}Mn_{1/3}O_2$, $LiNi_{0.8}Co_{0.1}Mn_{0.1}O_2$ and $LiNi_{0.7}Co_{0.1}Mn_{0.1}Al_{0.1}O_2$, and specifically, $LiCoO_2$, $LiCo_{0.7}Zn_{0.3}O_2$, $LiNi_{0.5}Co_{0.5}O_2$ or $LiNi_{0.8}Co_{0.1}Mn_{0.1}O_2$ may be solely used or a combination thereof may be used.

Further, the first mixture layer and the second mixture layer includes a positive electrode additive including a lithium cobalt oxide represented by Chemical formula 3:

[Chemical formula 3] $Li_aCo_{1-b}M^3_bO_4$

in the Chemical formula 3,

$M^3$ is at least one selected from the group consisting of W, Cu, Fe, V, Cr, Ti, Zr, Zn, Al, In, Ta, Y, La, Sr, Ga, Sc, Gd, Sm, Ca, Ce, Nb, Mg, B and Mo, and $5 \leq a \leq 7$ and $0 \leq b \leq 0.3$.

Since the positive electrode additive contains a lot of lithium, it is possible to provide lithium at the lithium consumption which occurs by an irreversible chemical and physical reaction in the negative electrode during the initial charge, thereby increasing the charge capacity of the battery and improving lifespan characteristics due to the decrease of the irreversible capacity.

In the present invention, lithium cobalt oxide represented by Chemical formula 3 is used as the positive electrode additive. Herein, the lithium cobalt oxide represented by Chemical formula 3 may include $Li_6CoO_4$, $Li_6Co_{0.5}Zn_{0.5}O_4$, $Li_6Co_{0.7}Zn_{0.3}O_4$, etc.

Further, the content of the positive electrode additive may be in the range of 0.1 to 5 parts by weight and specifically 0.1 to 3 parts by weight or 1 to 3 parts by weight based on a total of 100 parts by weight of the first mixture layer or the second mixture layer. According to the present invention, it is possible to maximize the initial charge capacity of the battery and reduce the amount of gas generated during the charge and discharge thereafter by adjusting the content of the positive electrode additive as described above.

Further, the first mixture layer and the second mixture layer binds the active material and the conductive material contained in each layer, and includes the first binder and the second binder in order to impart the adhesive force of the current collector and the first mixture layer and/or the first mixture layer and the second mixture layer.

At this time, the first binder included in the first mixture layer may be homopolymer derivated from one kind of fluorine-based monomer. Specifically, the first binder may be derivated from fluorine-based monomers such as vinylidene fluoride (VDF or VF2), tetrafluoroethylene (TFE), trifluoroethylene (TrFE), chlorotrifluoroethylene (CTFE), hexafluoropropene (HFP), vinyl fluoride (VF), hexafluoroisobutylene (HFIB), perfluorobutylethylene (PFBE), pentafluoropropene, 3,3,3-trifluoro-1-propene, and 2-trifluoromethyl-3,3,3-trifluoropropene.

In one example, the first binder may include polyvinylidene fluoride (PVDF) homopolymer. The "vinylidene fluoride homo polymer" or "PVDF" used in the present invention may mean what is polymerized by using vinylidene fluoride of 90 mol% or more, 95 mol% or more, or 98 mol% or more. According to the present invention, it is possible to prevent the decrease of the capacity and lifespan of the battery and decrease of the bonding force of the first mixture layer and the current collector by minimizing the side reaction with 10 $\mu$m or less size active materials having a large specific surface area while maintaining the swelling phenomenon for the electrolyte solution within a certain range by using a fluorine-based homopolymer derived from a fluorine-based monomer which does not include a separate functional group and is composed of only fluoroalkyl chain, as the first binder.

Further, the weight average molecular weight ($Mw_{1st}$) of the first binder may be in the range of 10,000 to 1,000,000 g/mol, and specifically in the range of 50,000 to 1,000,000 g/mol, 100,000 to 1,000,000 g/mol, 300,000 to 1,000,000 g/mol, 500,000 to 1,000,000 g/mol, 750,000 to 1,000,000 g/mol, 850,000 to 1,000,000 g/mol, 200,000 to 500,000 g/mol, 300,000 to 700,000 g/mol, 400,000 to 850,000 g/mol, or 100,000 to 250,000 g/mol. According to the present invention, it is possible to prevent aggregation of the first active material and the first conductive material, which are included in the first mixture layer, due to a low molecular weight, and prevent a rapid increase of viscosity of the composition for formation of a first mixture layer due to a high molecular weight by adjusting the weight average molecular weight ($Mw_{1st}$) of the first binder to be within the above range.

Further, the first binder may satisfy Formula 1:

$$[\text{Formula 1}]\ 1.0 \leq Mw_{2nd}/Mw_{1st} \leq 2.0$$

in the above Formula 1,

$Mw_{1st}$ denotes a weight average molecular weight of the first binder, and $Mw_{2nd}$ denotes a weight average molecular weight of the second binder.

The Formula 1 shows the condition about the ratio of the weight average molecular weight of the first binder included in the first mixture layer to the weight average molecular weight of the second binder included in the second mixture layer, and the Formula 1 indicates that the weight average molecular weight of the second binder may be equal to or greater within a double than the weight average molecular weight of the second binder. Specifically, in the Formula 1 of the present invention, 1.0 and 2.0 may be substituted by 1.05 and 1.95, 1.05 and 1.5, 1.05 and 1.2, 1.2 and 1.5, 1.6 and 2, 1.8 and 2, or 1.3 and 1.95, respectively. In the present invention, it is possible to prevent deterioration of the interface performance of the first mixture layer and the second mixture layer and to prevent the decrease of the lifespan due to the deviation of the weight average molecular weight of the first binder and the second binder by satisfying the Formula 1.

Further, the second binder may be fluorine-based copolymer obtained by using two or more fluorine-based monomers. Specifically, the fluorine-based copolymer may be obtained by copolymerizing two or more fluorine-based monomers selected from the group consisting of vinylidene fluoride (VDF or VF2), tetrafluoroethylene (TFE), trifluoroethylene (TrFE), chlorotrifluoroethylene (CTFE), hexafluoropropene (HFP), vinyl fluoride (VF), hexafluoroisobutylene (HFIB), perfluorobutylethylene (PFBE), pentafluoropropene, 3,3,3-trifluoro-1-propene, and 2-trifluoromethyl-3,3,3-trifluoropropene.

Further, the fluorine-based copolymer may include a miscible functional group. Herein, "miscible functional group" may mean a solid material included in the second mixture layer, for example, a functional group capable of improving miscibility with the second active material and the second conductive material and improving affinity between the electrolyte solution and the mixture layer of the positive electrode. The miscible functional group may include a functional group derived from one or more monomers selected from the group consisting of (meth)acrylic acid, C1 to C10 alkyl(meth)acrylate, C1 to C10 alkyl(meth)acrylonitrile, and C1 to C10 alkyl(meth)acrylamide.

Further, the content of the miscible functional group may be in the range of 0.1 to 10 mol%, and specifically in the range of 1 to 5 mol%, 3 to 8 mol%, 5 to 10 mol% or 1 to 3 mol% based on a total of 100 mol% of the fluorine-based copolymer which is the second binder. According to the present invention, it is possible to prevent a situation that the miscibility with the second active material and the second conductive material is not sufficiently implemented by a low content of the miscible functional group and to prevent a decrease in the adhesive force between the first mixture layer and the second mixture layer due to a miscible functional group of 10 mol% or higher by controlling the content of the miscible functional group contained in the fluorine-based copolymer to be within the above range.

In one example, the fluorine-based copolymer may be a copolymer, which is manufactured by copolymerizing about 1 to 30% hexafluoropropene (HFP) and about 70 to 99% vinylidene fluoride (VdF) as the fluorine-based monomer, or may include 3 to 5 mol% miscible functional group based on the total of 100 mol% of the copolymer using (meth)acrylic acid.

Further, at least one selected from the group consisting of natural graphite, artificial graphite, carbon black, acetylene black, Ketjen black, and carbon fiber may be used as the first conductive material and the second conductive material included in the first mixture layer and the second mixture layer. For example, the first conductive material and the second conductive material may include acetylene black.

Further, the first active material, the first binder and the first conductive material may be contained in the first mixture layer at a specific content and/or content ratio. Specifically, the first mixture layer may include a first active material of 75 to 98 parts by weight, the first binder of 2 to 20 parts by weight, and a first conductive material of 5 parts by weight or less among a total of 100 parts by weight. More specifically, the content of the first active material contained in the first mixture layer may be in the range of 80 to 98 parts by weight, 85 to 98 parts by weight, 90 to 98 parts by weight, 75 to 85 parts by weight, 85 to 95 parts by weight, 85 to 90 parts by weight or 90 to 95 parts by weight based on a total of 100 parts by weight of the first mixture layer. Further, the content of the first binder contained in the first mixture layer may be in the range of 4 to 20 parts by weight, 4 to 15 parts by weight, 4 to 12 parts by weight, 4 to 8 parts by weight, 8 to 20 parts by weight, 8 to 15 parts by weight, or 15 to 25 parts by weight based on the total of 100 parts by weight of the first mixture layer, and the content of the first conductive material may be equal to or less than 5 parts by weight, equal to or less than 3 parts by weight, in the range of 0.5 to 3 parts by weight or in the range of 0.5 to 2.5 parts by weight based on the total of 100 parts by weight of the first mixture layer.

In addition, the first mixture layer may satisfy at least one of Formula 2 and Formula 3:

$$[\text{Formula 2}] \ 4 \leq a/b \leq 20$$

$$[\text{Formula 3}] \ 15 < a/c$$

In the above Formulas 2 and 3, a denotes a content of a first active material, b denotes a content of the first binder, and c denotes a content of a first conductive material.

The Formula 2 is a condition indicating that the content ratio of the first active material to the first binder contained in the first mixture layer is in the range of 4 to 20 (that is, $4 \leq a/b \leq 20$), and in the Formula 2, 4 and 20 may be substituted by 4 and 10, 4 and 8, 5 and 10, 8 and 19, 8 and 11 or 15 and 20, respectively. By satisfying the condition of the Formula 2, it is possible to prevent decrease of the energy density and decrease of the lifespan due to a low content ratio (less than 4) of the first active material to the first binder and to prevent the decrease of the charge and discharge cycle lifespan and deterioration of the satisfy performance by the decrease of the adhesive force between the current collector and the first mixture layer due to a high content ratio (greater than 20) of the first active material to the first binder.

Further, the Formula 3 indicates that the content ratio of the first active material to the first conductive material exceeds 15 (that is, $15 < a/c$), and in the Formula 3, 15 may be substituted by 20, 40, 50 or 70. Alternatively, the Formula 3 may be the condition that a/c is in the range of 30 to 85, 35 to 50, 40 to 50, 45 to 50, 40 to 85, 50 to 85, 70 to 85 or 40 to 47. In the present invention, by satisfying the condition of the Formula 3, it is possible to prevent a situation that safety increases as a short circuit resistance does not increase in a non-ideal situation due to a significantly low resistance in the case that the content ratio of the first active material to the first conductive material is less than 15.

Further, the second active material, the second binder and the second conductive material may be contained in the second mixture layer at a specific content and/or content ratio, as in the first mixture layer.

Specifically, the second mixture layer may include a second active material of 80 to 98 parts by weight, the second binder of 1 to 10 parts by weight, and a second conductive material of 10 parts by weight or less among a total of 100 parts by weight. More specifically, the content of the second active material contained in the second mixture layer may be in the range of 85 to 98 parts by weight, 75 to 98 parts by weight, 75 to 85 parts by weight, 85 to 95 parts by weight, 85 to 90 parts by weight, 90 to 95 parts by weight, 90 to 98 parts by weight or 93 to 97 parts by weight, based on a total of 100 parts by weight of the second mixture layer. Further, the content of the first binder contained in the first mixture layer may be in the range of 1 to 10 parts by weight, 1 to 5 parts by weight, or 1 to 3 parts by weight based on the total of 100 parts by weight of the first mixture layer, and the content of the first conductive material may be equal to or less than 10 parts by weight, equal to or less than 7.5 parts by weight, equal to or less than 5 parts by weight, equal to or less than 4 parts by weight, in the range of 1 to 4.5 parts by weight or in the range of 2 to 4 parts by weight.

In addition, the second mixture layer may satisfy at least one of Formulas 4 to 6:

$$[\text{Formula 4}]\ a < a'$$

$$[\text{Formula 5}]\ b > b'$$

$$[\text{Formula 6}]\ c < c'$$

in the above Formula 4 to Formula 6, a, b and c are the same as defined in the above Formula 2 and Formula 3, a' denotes a content of a second active material, b' denotes a content of the second binder, and c' denotes a content of a second conductive material.

The Formulas 4 to 6 indicate the content ratio of each active material, binder and conductive material included in the first mixture layer and the second mixture layer. Specifically, the Formulas 4 to 6 show that the content the first active material and the first conductive material included in the first mixture layer is lower than that of the second active material and the second conductive material included in the second mixture layer, and the content of the first binder included in the first mixture layer is higher than that of the second binder included in the second mixture layer. According to the present invention, it is possible to prevent detachment on the interface of each layer and increase the short circuit resistance of the first mixture layer and the second mixture layer at a non-ideal situation by controlling the content of each component included in the first mixture layer and the second mixture layer to satisfy at least one of the Formulas 4 to 6.

Further, the average thickness of the first mixture layer and the second mixture layer may be equal to or less than 500 $\mu$m, respectively. For example, the average thickness of the first mixture layer and the second mixture layer may be in the range of 0.1 to 300 $\mu$m, and specifically in the range of 0.1 to 200 $\mu$m, 0.1 to 100 $\mu$m, 0.1 to 50 $\mu$m, 0.1 to 20 $\mu$m, 0.1 to 10 $\mu$m, 0.1 to 5 $\mu$m, 1 to 3 $\mu$m, 10 to 50 $\mu$m, 50 to 100 $\mu$m, 100 to 300 $\mu$m, or 100 to 200 $\mu$m. For example, the average thickness of the first mixture layer may be $3 \pm 0.5\mu$m, and the average thickness of the second mixture layer may be $150 \pm 10\mu$m. Alternatively, the average thickness of the first mixture layer may be $8 \pm 0.5\mu$m, and the average thickness of the second mixture layer may be $60 \pm 5\mu$m.

Further, in the positive electrode for a lithium secondary battery according to the present invention, a positive electrode current collector having high conductivity without causing chemical changes in the battery may be used. For example, stainless steel, aluminum, nickel, titanium, calcined carbon, etc. may be used, in the case of aluminum or stainless steel, what has been surface-treated by carbon, nickel, titanium, silver, etc. may be used. Further, the positive electrode current collector may have fine irregularities on the surface thereof to enhance the adhesion of the positive electrode active material, and various forms such as a film, a sheet, a foil, a net, a porous body, a foam, and a nonwoven fabric are possible. Further, the average thickness of the positive electrode current collector may be set to be in the range of 3 to 500 $\mu$m in consideration of the conductivity and the total thickness of the manufactured positive electrode.

As described above, a positive electrode for a lithium secondary battery according to the present invention sequentially includes a first mixture layer and a second mixture layer on a positive electrode current collector, and a heterogeneous fluorine-based binder having different miscibility and molecular weight is used for the first mixture layer and the second mixture layer respectively. Accordingly, it is possible to secure the safety of the battery by increasing the penetration resistance in the case that a metal body such as a nail penetrates the electrode, and the lifespan characteristics of the battery can be improved by enhancing the interface adhesive force of each layer constituting the positive electrode and wettability of the mixture layer to the electrolyte solution.

## Lithium secondary battery

Further, in an embodiment of the present invention,
the present invention provides a lithium secondary battery including the above-described positive electrode, a negative electrode, and a separator positioned between the positive electrode and the negative electrode.

The lithium secondary battery according to the present invention includes an electrode assembly where a separator is positioned between the positive electrode of the present invention and the negative electrode, and may have a structure where the electrode assembly is impregnated in an electrolyte solution containing lithium salt so that the positive electrode and the negative electrode may get wet by the electrolyte solution.

Herein, the negative electrode is manufactured by applying a slurry for anode manufacturing the negative electrode containing the negative electrode active material on the negative electrode current collector and then drying and pressing the slurry, and optionally, the conductive material, organic binder polymer, filler, etc. may be further included in the slurry as necessary.

Further, the negative electrode active material may include: a carbon or graphite material such as graphite having a complete layered crystal structure like natural graphite, soft carbon having a low crystalline layered crystal structure (graphene structure), hard carbon, artificial graphite, expanded graphite, carbon fiber, carbon black, carbon nanotube, fullerene, or activated carbon; metal complex oxide such as $Li_xFe_2O_3(0 \leq x \leq 1)$, $Li_xWO_2(0 \leq x \leq 1)$ or $Sn_xMe_{1-x}Me'_yO_z$ (Me: Mn, Fe, Pb, Ge; Me', Al, B, P, Si, group 1, group 2, group 3 element, halogen of the periodic table; $0<x \leq 1$; $1 \leq y \leq 3$; $1 \leq z \leq 8$); lithium metal; lithium alloy; silicon alloy; tin alloy; metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ or $Bi_2O_5$ conductive polymer such as polyacetylene; Li-Co-Ni-based material; titanium oxide; lithium titanium oxide, etc.

As one example, the negative electrode active material may include silicon-containing particles, the graphite may include at least one of natural graphite with a layered crystal structure and artificial graphite with an isotropic structure, and the silicon-containing particles may include silicon particles, silicon oxide ($SiO_2$) particles or what is mixed with silicon particles, silicon oxide ($SiO_2$) particles as the metal element.

In this case, the negative electrode active material may include graphite of 80 to 95 parts by weight and silicon-containing particles of 1 to 20 parts by weight, based on the total of 100 parts by weight of the negative electrode active material. According to the present invention, it is possible to improve the charge capacity per unit mass while reducing the lithium consumption and irreversible capacity loss at the time of the initial charge and discharge of the battery by adjusting the content of graphite and silicon-containing particles included in the negative electrode active material to be in the above range.

Further, the average thickness of the negative electrode mixture layer may be in the range of 100 to 200 $\mu$m, and specifically in the range of 100 to 180 $\mu$m, 100 to 150 $\mu$m, 120 to 200 $\mu$m, 140 to 200 $\mu$m, or 140 to 160 $\mu$m.

Further, the negative electrode current collector is not particularly limited as long as it has high electrical conductivity without causing chemical changes in the battery, and examples thereof include copper, stainless steel, nickel, titanium, sintered carbon, etc. Further, in the case of copper or stainless steel, what has been surface-treated with carbon, nickel, titanium, silver, etc. may be used. Further, the negative electrode current collector may reinforce bonding force with the negative electrode active material by forming minute irregularities on the surface as in the positive electrode current collector and may have various forms such as a film, a sheet a foil, a net, a porous body, a foam, and a non-woven fabric. Further, the average thickness of the negative electrode current collector may be set to be in the range of 3 to 500 $\mu$m in consideration of the conductivity and the total thickness of the manufactured negative electrode.

Further, the separator may be formed of an insulating thin film having high ion permeability and mechanical strength. Specifically, the separator may be made of any material which is generally used in the related art. However, for example, a sheet or non-woven fabric, which is made using at least one selected from the group consisting of chemically resistant and hydrophobic polypropylene; polyethylene; polyethylene-polypropylene copolymer; and glass fiber, may be used, and in some cases, a complex separator, which is generated by inorganic particles/ organic particles on a porous polymer substrate such as the sheet or non-woven fabric by an organic binder polymer, may be used.

Further, the average diameter of pores of the separator may be in the range of 0.01 to 10 $\mu$m, and the average thickness may be in the range of 5 to 300 $\mu$m. In one example, the average diameter of pores of the separator may be in the range of 0.01 to 1 $\mu$m, and the average thickness may be in the range of 10 to 30 $\mu$m.

Further, the air permeability of the separator may be in the range of 150 to 350 sec./100 ml and specifically in the range of 160 to 300 sec./100 ml or 200 to 280 sec./100 ml. According to the present invention, it is possible to prevent heat generation and/or ignition of the battery when a needle conductor is penetrated from an external side while maintaining wettability to the electrolyte and electric performance of the battery at a high level by controlling the air permeability of the separator to be within the above range.

Further, the electrode assembly may be wound in a jelly roll form and accommodated in a cylindrical battery, a rectangular battery or a pouch-type battery, or may be accommodated in a pouch-type battery in a folding or stack & folding form. However, the present invention is not limited to this example.

Further, the lithium salt-containing electrolyte solution according to the present invention may be composed of a lithium salt and an electrolyte solution, and a non-aqueous organic solvent, an organic solid electrolyte, an inorganic solid electrolyte, etc. may be used as the electrolyte solution.

Examples of the non-aqueous organic solvent include N-methyl-2-pyrrolidinone, ethylene carbonate, propylene carbonate, butylene carbonate, dimethyl carbonate, diethyl carbonate, gamma-Butyrolactone, 1,2-dimethoxyethane, tetrahydro franc, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ethers, methyl propionate, ethyl propionate, etc.

Examples of the organic solid electrolyte include a polymer electrolyte such as a polyethylene derivative, a polyethylene oxide derivative, a polypropylene oxide derivative, a phosphate ester polymer, an agitation lysine, a polyester sulfide, a polyvinyl alcohol, a polyvinylidene fluoride, a polymer including an ionic dissociation group, and the like.

Examples of the inorganic solid electrolyte include nitrides, halides, and sulfates of Li such as $Li_3N$, $LiI$, $Li_5NI_2$, $Li_3N$-$LiI$-$LiOH$, $LiSiO_4$, $LiSiO_4$-$LiI$-$LiOH$, $Li_2SiS_3$, $Li_4SiO_4$, $Li_4SiO_4$-$LiI$-$LiOH$, and $Li_3PO_4$-$Li_2S$-$SiS_2$.

The lithium salt is a substance that is soluble in the non-aqueous electrolyte. The examples of the lithium salt include $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, chloroborane lithium, lower aliphatic carboxylic acid lithium, lithium 4-phenylboronic acid lithium, imide and the like.

For the purpose of improving charge/discharge characteristics, flame retardancy, etc., pyridine, triethylphosphite, triethanolamine, cyclic ether, ethylenediamine, n-glyme, hexamethyl phosphoric triamide, nitrobenzene derivative, sulfur, quinone imine dye, N-substituted oxazolidinone, N,N-substituted imidazolidine, ethylene glycol dialkyl ether, ammonium salt, pyrrole, 2-methoxyethanol, aluminum trichloride, etc. may be added to the electrolyte solution. In some cases, a halogen-containing solvent such as carbon tetrachloride or ethylene trifluoride may be further added to impart nonflammability, or a carbon dioxide gas may be further added to improve the high-temperature storage characteristics, and fluoroethylene carbonate (FEC), propene sultone (PRS), and the like may be further added.

## Battery module

Further, in an embodiment of the present invention,
the present invention provides a battery module including the above-described secondary battery as a unit battery, and provides a battery pack including the battery module.

The battery pack may be used a power source of a medium and large size device which requires high temperature stability, long cycle characteristics, and high rate characteristics, and some examples of the medium and large size device include electric vehicles such as an electric vehicle (EV), a hybrid electric vehicle (HEV), and a plug-n hybrid electric vehicle (PHEV), electric two wheel vehicles such as an electric bike and an electric scooter, an electric golf cart, and a system for power storage, and more specifically, a hybrid electric vehicle (HEV) may be used, but the present invention is not limited to these examples.

[Detailed Description of the Preferred Embodiments]

Hereinafter, the present invention will be described in detail with reference to examples and experimental examples.

However, the Examples and Experimental Examples are provided to illustrate the present invention, and the scope of the present invention is not limited by these Examples and Experimental Examples.

## Examples 1-5 and Comparative examples 1-10. Manufacture of positive electrode for lithium secondary battery

$LiFePO_4$ as the first active material (average diameter ($D_{50}$): 1 $\mu$m, BET specific surface area: 15 $m^2/g$), PVdF homopolymer as the first binder, and carbon black as the first conductive material were prepared, which were then mixed with a N-methyl pyrrolidone (NMP) solvent, to thereby manufacture a slurry for a first mixture layer.

Separately, $LiNi_{0.8}Co_{0.1}Mn_{0.1}O_2$ as the second active material, PVdF-HFP copolymer as the second binder (PVdF: HFP = 75 to 85mol%: 15 to 25mol%), and carbon black as the second conductive material were prepared, and they were mixed with a N-methyl pyrrolidone (NMP) solvent to thereby manufacture a slurry for a second mixture layer. At this time, PVDF-HFP copolymer containing methyl acrylate as a miscible functional group was used as the second binder.

Further, the weight average molecular weight ($Mw_{1st}$) of the first binder, the weight average molecular weight ratio ($Mw_{2nd}/Mw_{1st}$) of the first binder to the second binder, and the content of the miscible functional group contained in the second binder are shown in following Table 1. Further, the active material, the binder and the conductive material contained in each slurry were mixed as in the following Table 2.

The prepared slurry for the first mixture layer and slurry for the second mixture layer were sequentially coated on aluminum foil, which were then dried and rolled, to thereby manufacture a positive electrode for a lithium secondary battery where the first mixture layer and the second mixture layer have been formed on aluminum foil. At this time, the average thickness of the first mixture layer and the second mixture layer were 8 $\mu$m and 120 $\mu$m, respectively.

[Table 1]

| | $Mw_{1st}$ [g/mol] | $Mw_{2nd}/Mw_{1st}$ | Miscible functional group content based on PVdF-HFP 100 mol% |
|---|---|---|---|
| Example 1 | 400,000±50,000 | 1.4 | 6±1 mol% |
| Example 2 | 400,000±50,000 | 1.1 | 6±1 mol% |
| Example 3 | 400,000±50,000 | 1.9 | 6±1 mol% |
| Example 4 | 400,000±50,000 | 1.4 | 6±1 mol% |
| Example 5 | 400,000±50,000 | 1.4 | 6±1 mol% |
| Comparative Example 1 | 400,000±50,000 | 1.4 | 6±1 mol% |
| Comparative Example 2 | 400,000±50,000 | 1.4 | 6±1 mol% |
| Comparative Example 3 | 400,000±50,000 | 1.4 | 6±1 mol% |
| Comparative Example 4 | 400,000±50,000 | 0.8 | 6±1 mol% |
| Comparative Example 5 | 400,000±50,000 | 2.5 | 6±1 mol% |
| Comparative Example 6 | 5000±500 | 1.4 | 6±1 mol% |
| Comparative Example 7 | 2,000,000±500,00 0 | 1.4 | 6±1 mol% |
| Comparative Example 8 | 400,000±50,000 | 1.4 | 0 mol% |
| Comparative Example 9 | 400,000±50,000 | 1.4 | 0.5 mol% |
| Comparative Example 10 | 400,000±50,000 | 1.4 | 20 mol% |

[Table 2]

| | First mixture layer | | | Second mixture layer | | | a/b | a/c |
|---|---|---|---|---|---|---|---|---|
| | Active material (a) | Binder (b) | Conductive material (c) | Active material (a') | Binder (b') | Conductive material (c') | | |
| Example 1 | 88 | 10 | 2 | 95 | 2 | 3 | 8.8 | 44 |
| Example 2 | 88 | 10 | 2 | 95 | 2 | 3 | 8.8 | 44 |
| Example 3 | 88 | 10 | 2 | 95 | 2 | 3 | 8.8 | 44 |
| Example 4 | 80 | 19 | 1 | 95 | 2 | 3 | 4.2 | 80 |
| Example 5 | 93 | 5 | 2 | 95 | 2 | 3 | 18.6 | 46.5 |
| Comparative Example 1 | 95 | 3 | 2 | 95 | 2 | 3 | 31.7 | 47.5 |
| Comparative Example 2 | 95 | 5 | 10 | 95 | 2 | 3 | 17 | 8.5 |
| Comparative Example 3 | 76 | 22 | 2 | 95 | 2 | 3 | 3.5 | 38 |
| Comparative Example 4 | 88 | 10 | 2 | 95 | 2 | 3 | 8.8 | 44 |
| Comparative Example 5 | 88 | 10 | 2 | 95 | 2 | 3 | 8.8 | 44 |
| Comparative Example 6 | 88 | 10 | 2 | 95 | 2 | 3 | 8.8 | 44 |
| Comparative Example 7 | 88 | 10 | 2 | 95 | 2 | 3 | 8.8 | 44 |

(continued)

| | First mixture layer | | | Second mixture layer | | | a/b | a/c |
|---|---|---|---|---|---|---|---|---|
| | Active material (a) | Binder (b) | Conductive material (c) | Active material (a') | Binder (b') | Conductive material (c') | | |
| Comparative Example 8 | 88 | 10 | 2 | 95 | 2 | 3 | 8.8 | 44 |
| Comparative Example 9 | 88 | 10 | 2 | 95 | 2 | 3 | 8.8 | 44 |
| Comparative Example 10 | 88 | 10 | 2 | 95 | 2 | 3 | 8.8 | 44 |

**Experimental Example**

Following experiments were performed to evaluate the performance of a positive electrode for a lithium secondary battery according to the present invention.

A) Evaluation of wettability of electrolyte solution

The surface contact angle was measured using Drop Shape Analysis System (DSA100) (KRUSS, Germany). Specifically, a drop of deionized water was dropped on the surface of the positive electrode for a lithium secondary battery manufactured in examples and comparative examples using a micro syringe. Thereafter, a contact angle was measured by capturing a photograph of deionized water dropped on the surface of the positive electrode and analyzing the captured photograph, and the average value was obtained by repeating the process 20 times. The results are shown in Table 3.

B) Evaluation of interlayer adhesive force

The positive electrode, which was manufactured in each of the examples and comparative examples, was cut to have a width of 25 mm and a length of 70 mm, which was then laminated using a press at the condition of 70°C and 4 MPa, to thereby manufacture a specimen. The prepared specimen was attached and fixed on a glass plate by using a double-sided tape, and at this time, a current collector was arranged to face the glass plate. The second mixture layer portion of the specimen was peeled off at the angle of 90° and at the speed of 100 mm/min at 25°C, the peeling force at this time was measured in real time, and the average value was defined as the interface adhesive force B between the first mixture layer and the second mixture layer. The interface adhesive force of the current collector and the first mixture layer was also measured in the same manner, and the result was shown in following Table 3.

C. Nail penetration test

A lithium secondary battery was manufactured using each positive electrode manufactured in the examples and comparative examples. Specifically, natural graphite, carbon black conductive material, and PVDF binder were mixed in N-methyl pyrrolidone solvent at the weight ratio of 85: 10: 5, to thereby manufacture a slurry for forming a negative electrode, which was then coated on a copper foil to thereby manufacture a negative electrode.

The manufactured negative electrode was laminated on a prepared positive electrode while disposing a separator therebetween to thereby manufacture an electrode assembly, and the electrode assembly was positioned in a battery case and an electrolyte solution was injected into a case, thereby manufacture a lithium secondary battery. At this time, a porous polyethylene (PE) film (thickness: about 16 $\mu$m, pore diameter: 0.9 $\mu$m, air permeability: 200 to 280 sec/100 ml) was used as the separator. Further, lithium hexafluorophosphate (LiPF$_6$) of 1.0M concentration was dissolved in an organic solvent consisting of ethylene carbonate/dimethyl carbonate/ethyl methylcarbonate (EC / DMC / EMC volume ratio = 3/ 4/ 3) to manufacture an electrolyte solution.

It was evaluated whether to be ignited when a metal body having a diameter of 3 mm descended at a speed of 80 mm/sec. and penetrated a cell in the same condition as PV8450 authentication condition for the manufactured lithium secondary battery, and the result was shown in Table 3 below.

D) Evaluation of cycle lifespan performance

A lithium secondary battery was manufactured using each positive electrode which was manufactured in examples and comparative examples in the same manner as the nail penetration test. The capacity retention rate [%] of each manufactured lithium secondary battery was measured while performing charge and discharge 200 times at the condition of the charging end voltage of 4.25V, discharging end voltage of 2.5V, and 0.33C/0.33C at 25°C. Herein, the capacity retention rate was calculated using Formula 7, and the result is shown in the following table 3:

[Formula 7]

$$\text{Capacity retention rate (\%)} = (\text{Discharge capacity after n times of charge and discharge/discharge capacity after one time charge and discharge} \times 100)$$

[Table 3]

| | Contact angle[°] of second mixture layer | Interlayer adhesive force (N/m) | | Whether ignited at nail penetration (Pass/Test) | Capacity retention rate [%] after 200 times (n=200) of charge and discharge |
|---|---|---|---|---|---|
| | | A | B | | |
| Example 1 | 71±2° | 460 | 34 | 6P/6T | 95.8 |
| Example 2 | | 425 | 33 | 6P/6T | 96.3 |
| Example 3 | | 387 | 35 | 6P/6T | 95.7 |
| Example 4 | | 510 | 34 | 6P/6T | 95.1 |
| Example 5 | | 390 | 28 | 6P/6T | 97.1 |
| Comparative Example 1 | | 196 | 32 | 2P/6T | 92.3 |
| Comparative Example 2 | | 118 | 22 | 0P/6T | 92.7 |
| Comparative Example 3 | | 391 | 34 | 1P/6T | 88.3 |
| Comparative Example 4 | | 442 | 31 | 2P/6T | 88.5 |
| Comparative Example 5 | | 433 | 17 | 0P/6T | 87.6 |
| Comparative Example 6 | | 415 | 25 | 3P/6T | 89.4 |
| Comparative Example 7 | | 341 | 23 | 3P/6T | 90.4 |
| Comparative Example 8 | 95±2° | 416 | 27 | 4P/6T | 88.7 |
| Comparative Example 9 | 92±2° | 397 | 29 | 1P/6T | 91.2 |
| Comparative Example 10 | 62±2° | 424 | 19 | 3P/6T | 92.8 |

As shown in the above table 3, according to the electrode assembly of the example of the present invention, it is possible to improve the lifespan and safety of the battery.

Specifically, the contact angle of the positive electrode in the example is less than 80° or 75°, or in the range of 68 to 73°. This means that the wettability to the electrolyte solution is more excellent than that of the positive electrode of the comparative examples 8 and 9 in which no or a significantly small amount of functional groups are contained in the first binder.

Further, as the interlayer interface adhesive force is improved in the positive electrode of the example, the adhesive force A between the current collector and the first mixture layer, and the adhesive force B between the first mixture layer and the second mixture layer were 380 N/m or higher and 26 N/m or higher, which were relatively high. Further, it is seen that in the positive electrodes, ignition is suppressed by the increase of the short circuit resistance at the time of nail penetration.

Further, in the positive electrodes in the examples maintained the capacity retention rate of 95% or higher even after 200 times of charge and discharge. This means that the battery lifespan has improved, compared to the positive electrode of the comparative example.

As such, a positive electrode for a lithium secondary battery according to the present invention sequentially includes a first mixture layer and a second mixture layer on a positive electrode current collector, and a heterogeneous fluorine-based binder having different miscibility and molecular weight is used for the first mixture layer and the second mixture layer respectively. Accordingly, it is possible to secure the safety of the battery by increasing the penetration resistance in the case that a metal body such as a nail penetrates the electrode, and the lifespan characteristics of the battery can be improved by enhancing the interface adhesive force of each layer constituting the positive electrode and wettability of the mixture layer to the electrolyte solution at the same time.

Although the above has been described with reference to a preferred embodiment of the present invention, it can be understood that those skilled in the art can make various modifications and changes to the present invention without departing from the spirit and scope of the invention as set forth in the claims below.

Therefore, the technical scope of the present invention should not be limited to the contents described in the detailed description of the specification but should be defined by the claims.

## Claims

1. A positive electrode for a lithium secondary battery, the positive electrode comprising a structure including a laminate including sequential lamination of a current collector, a first mixture layer, and a second mixture layer, in order,

   wherein the first mixture layer includes a first binder containing a fluorine-based homopolymer, and
   wherein the second mixture layer includes a second binder containing a fluorine-based copolymer having a miscible functional groupderived from one or more monomers selected from the group consisting of (meth)acrylic acid, C1 to C10 alkyl(meth)acrylate, C1 to C10 alkyl(meth)acrylonitrile, and C1 to C10 alkyl(meth)acrylamide.

2. The positive electrode of claim 1, wherein the first binder and the second binder satisfy Formula 1:

$$[\text{Formula 1}]$$

$$1.0 \leq \text{Mw}_{2nd}/\text{Mw}_{1st} \leq 2.0,$$

   in the above Formula 1,

   $\text{Mw}_{1st}$ denotes a weight average molecular weight of the first binder, and
   $\text{Mw}_{2nd}$ denotes a weight average molecular weight of the second binder.

3. The positive electrode of claim 1, wherein a weight average molecular weight ($\text{Mw}_{1st}$) of the first binder is in a range of 10,000 g/mol to 1,000,000 g/mol.

4. The positive electrode of claim 1, wherein a content of the miscible functional group is in a range of 0.1 mol% to 10 mol% of the fluorine-based copolymer.

5. The positive electrode of claim 1, wherein the first mixture layer includes, basedon 100 parts by weght of the first mixture layer:

   75 to 98 parts by weight of a first active material,

2 to 20 parts by weight of the first binder, and
5 parts by weight or less of a first conductive material.

6. The positive electrode of claim 5, wherein the first active material includes lithium iron phosphate represented by Chemical formula 1:

[Chemical formula 1] $Li_{1+x}Fe_{1-y}M^1_y(PO_{4-z})X_z$,

in the above Chemical formula 1,

$M^1$ denotes at least one selected from the group consisting of Al, Mg and Ti, and X denotes at least one selected from the group consisting of F, S and N, and
$-0.5 \leq x \leq +0.5$, $0 < y < 0.5$ and $0 \leq z \leq 0.1$.

7. The positive electrode of claim 1, wherein the first mixture layer satisfies at least one of Formula 2 and Formula 3:

$$[\text{Formula 2}] \ 4 \leq a/b \leq 20,$$

and

$$[\text{Formula 3}] \ 15 < a/c,$$

in the above Formula 2 and Formula 3,

a denotes a content of a first active material,
b denotes a content of the first binder, and
c denotes a content of a first conductive material.

8. The positive electrode of claim 1, wherein the second mixture layer includes, based on 100 parts by weight of the second mixture layer:

80 to 98 parts by weight of a second active material,
1 to 10 parts by weight of the second binder, and
10 parts by weight or less of a second conductive material.

9. The positive electrode of claim 1, wherein the first mixture layer and the second mixture layer satisfy at least one of Formulas 4 to 6:

$$[\text{Formula 4}] \ a < a',$$

$$[\text{Formula 5}] \ b > b',$$

and

$$[\text{Formula 6}] \ c < c',$$

in the above Formula 4 to Formula 6,

a denotes a content of a first active material,
b denotes a content of the first binder,
c denotes a content of a first conductive material,

a' denotes a content of a second active material,

b' denotes a content of the second binder, and

c' denotes a content of a second conductive material.

10. The positive electrode of claim 1, wherein an average thickness of the first mixture layer is in a range of 0.1 to 300 $\mu$m.

11. The positive electrode of claim 1, wherein an average thickness of the first mixture layer is in a range of 0.1 to 10 $\mu$m.

12. A lithium secondary battery comprising the positive electrode according to claim 1, a negative electrode, and a separator positioned between the positive electrode and the negative electrode.

<div align="center">

**INTERNATIONAL SEARCH REPORT**

</div>

| | International application No. |
|---|---|
| | **PCT/KR2021/016787** |

| **A.** | **CLASSIFICATION OF SUBJECT MATTER** |
|---|---|

**H01M 4/13**(2010.01)i; **H01M 4/136**(2010.01)i; **H01M 4/62**(2006.01)i; **H01M 4/58**(2010.01)i; **H01M 10/052**(2010.01)i; **H01M 4/02**(2006.01)i

According to International Patent Classification (IPC) or to both national classification and IPC

| **B.** | **FIELDS SEARCHED** |
|---|---|

Minimum documentation searched (classification system followed by classification symbols)

H01M 4/13(2010.01); C08F 214/22(2006.01); C08F 220/18(2006.01); H01M 10/0525(2010.01); H01M 4/02(2006.01); H01M 4/485(2010.01); H01M 4/58(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다층(multi-layer), 양극(positive electrode), 결합제(binder), 불소계 호모폴리머 (fluorine-based homopolymer), 관능기(functional group), (메트)아크릴산((meth)acrylic acid), 불소계 코폴리머(fluorine-based copolymer)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | US 2013-0216914 A1 (HYDRO-QUEBEC) 22 August 2013 (2013-08-22)<br>See paragraphs [0219] and [0248]; and figure 1. | 1-12 |
| A | KR 10-2012-0069314 A (LG CHEM, LTD.) 28 June 2012 (2012-06-28)<br>See entire document. | 1-12 |
| A | KR 10-2010-0016468 A (SOLVAY SOLEXIS S.P.A.) 12 February 2010 (2010-02-12)<br>See entire document. | 1-12 |
| A | US 2006-0019151 A1 (IMACHI, N. et al.) 26 January 2006 (2006-01-26)<br>See entire document. | 1-12 |
| A | JP 4929573 B2 (DAINIPPON PRINTING CO., LTD.) 09 May 2012 (2012-05-09)<br>See entire document. | 1-12 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **02 March 2022** | **02 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/016787**

| Patent document cited in search report | | | Publication date (day/month/year) | Patent family member(s) | | | Publication date (day/month/year) |
|---|---|---|---|---|---|---|---|
| US | 2013-0216914 | A1 | 22 August 2013 | CA | 2535064 | A1 | 01 August 2007 |
| | | | | CA | 2640173 | A1 | 09 August 2007 |
| | | | | CA | 2640173 | C | 26 July 2016 |
| | | | | CN | 101378897 | A | 04 March 2009 |
| | | | | CN | 101378897 | B | 27 March 2013 |
| | | | | CN | 103258999 | A | 21 August 2013 |
| | | | | CN | 103258999 | B | 03 August 2016 |
| | | | | EP | 1984175 | A1 | 29 October 2008 |
| | | | | EP | 1984175 | B1 | 30 December 2015 |
| | | | | ES | 2562409 | T3 | 04 March 2016 |
| | | | | JP | 2009-525568 | A | 09 July 2009 |
| | | | | JP | 5349974 | B2 | 20 November 2013 |
| | | | | KR | 10-1357885 | B1 | 06 February 2014 |
| | | | | KR | 10-2008-0091499 | A | 13 October 2008 |
| | | | | US | 2009-0301866 | A1 | 10 December 2009 |
| | | | | US | 8435671 | B2 | 07 May 2013 |
| | | | | US | 9034490 | B2 | 19 May 2015 |
| | | | | WO | 2007-087714 | A1 | 09 August 2007 |
| KR | 10-2012-0069314 | A | 28 June 2012 | KR | 10-1517043 | B1 | 30 April 2015 |
| KR | 10-2010-0016468 | A | 12 February 2010 | CN | 101679563 | A | 24 March 2010 |
| | | | | CN | 101679563 | B | 18 January 2012 |
| | | | | EP | 2147029 | A1 | 27 January 2010 |
| | | | | EP | 2147029 | B1 | 20 February 2013 |
| | | | | JP | 2010-525124 | A | 22 July 2010 |
| | | | | JP | 5283688 | B2 | 04 September 2013 |
| | | | | KR | 10-1529740 | B1 | 18 June 2015 |
| | | | | TW | 200911848 | A | 16 March 2009 |
| | | | | TW | I437009 | B | 11 May 2014 |
| | | | | US | 2010-0133482 | A1 | 03 June 2010 |
| | | | | US | 8337725 | B2 | 25 December 2012 |
| | | | | WO | 2008-129041 | A1 | 30 October 2008 |
| US | 2006-0019151 | A1 | 26 January 2006 | EP | 1619733 | A1 | 25 January 2006 |
| | | | | JP | 2007-026676 | A | 01 February 2007 |
| | | | | JP | 4999292 | B2 | 15 August 2012 |
| | | | | KR | 10-2006-0053980 | A | 22 May 2006 |
| JP | 4929573 | B2 | 09 May 2012 | JP | 2006-107767 | A | 20 April 2006 |

Form PCT/ISA/210 (patent family annex) (July 2019)

**REFERENCES CITED IN THE DESCRIPTION**

**Patent documents cited in the description**

- KR 1020210039316
- KR 20190047203